# FASCICULE DE BREVET EUROPEEN

(11) **EP 1 115 593 B1**
(45) Date de publication et mention de la délivrance du brevet: **05.03.2003**
(21) Numéro de dépôt: 99946258.3
(22) Date de dépôt: 29.09.1999
(51) Int. Cl.: B60R 1/12

(54) **ACCESSOIRE POUR VEHICULE AUTOMOBILE COMPRENANT UN ECRAN D'AFFICHAGE D'INFORMATIONS POUR LE CONDUCTEUR**
KRAFTFAHRZEUGZUBEHÖR MIT EINEM INFORMATIONSBILDSCHIRM FÜR DEN FAHRER
MOTOR VEHICLE ACCESSORY COMPRISING A DATA DISPLAY SCREEN FOR THE DRIVER

(30) Priorité: 30.09.1998 FR 9812240; 09.10.1998 FR 9812697
(43) Date de publication de la demande: 18.07.2001
(73) Titulaire: Jodon de Villeroche, Gérard, F-75116 Paris (FR)
(72) Inventeur: Jodon de Villeroche, Gérard, F-75116 Paris (FR)
(74) Mandataire: Grynwald, Albert
(86) Numéro de dépôt international: FR9902311
(87) Numéro de publication internationale: WO00018612

(56) Documents cités:
- US-A- 5 631 638
- US-A- 5 708 410
- PATENT ABSTRACTS OF JAPAN vol. 009, no. 326 (M-441), 21 décembre 1985 (1985-12-21) & JP 60 157941 A (MATSUSHITA DENKI SANGYO KK), 19 août 1985 (1985-08-19)
- PATENT ABSTRACTS OF JAPAN vol. 096, no. 012, 26 décembre 1996 (1996-12-26) & JP 08 216789 A (MUGEN:KK), 27 août 1996 (1996-08-27)
- PATENT ABSTRACTS OF JAPAN vol. 014, no. 157 (M-0955), 27 mars 1990 (1990-03-27) & JP 02 018130 A (ROODE RANNAA KK), 22 janvier 1990 (1990-01-22)

## Description

La présente invention est relative à un accessoire pour véhicule automobile comprenant un boîtier d'écran d'affichage d'informations selon les préambules des revendications 1 ou 13.

Il existe actuellement divers types de dispositifs à écran fournissant des informations utiles pour la conduite et qui sont destinés à être installés à bord d'un véhicule automobile. Les dispositifs les plus courants sont les appareils de navigation qui affichent des données cartographiques et/ou des informations de guidage sous forme de cartographies ou d'instructions symboliques.

Un écran peut aussi être utilisé dans d'autres fonctions pour visualiser des informations relatives à la densité de circulation sur le trajet du véhicule. L'écran peut également être utilisé, quand la visibilité est réduite, pour la visualisation d'obstacles se trouvant devant le véhicule, ces obstacles étant détectés par un radar. Il existe aussi des écrans montrant, grâce à une caméra, la route à l'arrière du véhicule et facilitant ainsi la conduite en marche arrière.

Ces écrans destinés au conducteur sont, le plus souvent, disposés sur le tableau de bord, en général, pour être visibles du côté du siège du conducteur, ou au milieu ; ces écrans sont en des emplacements distincts des emplacements où se trouvent les informations de conduite du véhicule, telles que la vitesse. Ces écrans obligent ainsi le conducteur à porter son regard dans une direction différente des directions vers lesquelles il doit se tourner périodiquement telles que les directions de l'un des rétroviseurs (il existe, en général, trois rétroviseurs dans un véhicule : l'un intérieur et un de chaque côté) et du compteur de vitesse. Cette disposition n'est pas favorable à la sécurité de la conduite.

Par ailleurs, on a déjà proposé un appareil de navigation dont l'écran a, en plus de son rôle d'affichage, une fonction de miroir rétroviseur. Mais ce dispositif présente l'inconvénient d'altérer la vision vers l'arrière quand l'écran est actif ; de plus, il est de réalisation onéreuse.

L'invention remédie à ces inconvénients.

US 189 55 60 A sert de base pour la présentation en deux parties des revendications 1 et 13. Selon ces revendications, l'écran peut être observé en même temps que le rétroviseur et il n'affecte pas la vision dans le miroir du rétroviseur. L'invention n'altère donc pas la sécurité de la conduite, car le conducteur doit généralement porter son regard périodiquement sur le rétroviseur intérieur et sur les rétroviseurs extérieurs.

L'invention fournit ainsi un dispositif simple, qui peut donc être réalisé de façon économique, et dont l'usage détourne de façon minimale l'attention du conducteur de l'opération de conduite.

Quand le boîtier d'écran est fixé au boîtier du rétroviseur intérieur, lorsque le conducteur observe l'écran, il garde la vision complète de la route vers l'avant.

Quand on utilise un boîtier d'écran fixé à au moins l'un des boîtiers d'un rétroviseur extérieur, on peut combiner cette utilisation à celle d'un autre boîtier d'écran fixé au rétroviseur intérieur.

Dans ce cas, l'écran (ou les écrans) extérieur fournit, par exemple, les mêmes informations que l'écran intérieur et constitue en quelque sorte un "répéteur" de l'écran intérieur. Il n'est alors pas indispensable que l'écran (ou les écrans) extérieur soit(ent) actif(s) en permanence.

Ainsi, l'écran extérieur droit peut être activé quand le véhicule tourne (ou s'apprête à tourner) à droite et l'écran extérieur gauche peut être activé quand le véhicule tourne (ou s'apprête à tourner) à gauche. L'activation de l'écran est commandée, par exemple, par la manoeuvre de l'indicateur de changement de direction ou par une commande spécifique, ou encore de façon automatique par le programme d'un appareil de navigation.

De façon générale, l'activation de l'écran (ou des écrans) extérieur (qu'ils soient utilisés ou non en combinaison avec un écran intérieur) s'effectue de façon manuelle ou automatique, notamment par programme.

L'écran (ou les écrans) extérieur peut aussi fournir des informations différentes de celles fournies par l'écran intérieur. Toutefois, il est préférable que ces informations aient une relation entre elles, par exemple, l'information sur l'écran (ou les écrans) extérieur complétant l'information sur l'écran intérieur. Ainsi, pour un appareil de navigation, dans une réalisation, l'écran intérieur fournit une information générale cartographique ou graphique se rapportant à l'itinéraire et au guidage, et un écran extérieur (ou les deux) fournit une indication ou instruction précise sur un changement de direction à effectuer ; l'écran extérieur de gauche montre un agrandissement de l'itinéraire, présenté dans la direction du véhicule, représentant une instruction pour tourner à gauche et, de façon analogue, l'écran extérieur de droite présente, lorsque le véhicule devra tourner à droite, une instruction pour tourner à droite. Les échelles de l'écran intérieur et de l'écran (ou des écrans) extérieur peuvent être différentes, l'échelle de l'écran intérieur montrant, par exemple, une partie de l'itinéraire, alors que l'échelle de l'écran extérieur est telle qu'il montre seulement le carrefour où le conducteur doit changer de direction.

Le boîtier de l'écran peut être fixé à un côté quelconque du boîtier du rétroviseur. Dans le cas d'un rétroviseur extérieur, on choisira de préférence le côté intérieur ou côté carrosserie ; dans ce cas, l'écran n'altère en rien la visibilité.

Il est préférable que l'écran soit observé de face, c'est-à-dire perpendiculairement à sa surface, notamment quand cet écran est du type à cristaux liquides. Dans ce cas, son plan présente une orientation différente de celle du rétroviseur. Cette orientation peut être réglable, par exemple à l'aide d'une double articulation du boîtier de l'écran au boîtier du rétroviseur. L'articulation peut être réalisée à l'aide d'une rotule. La fixation du boîtier de l'écran au boîtier du rétroviseur peut être effectuée par un dispositif de serrage ou pinçage appelé clipsage.

On peut disposer les commandes de visualisation sur le boîtier de l'écran intérieur.

Dans une autre réalisation, une partie au moins des commandes de visualisation se trouve sur le boîtier du rétroviseur intérieur. Dans un exemple, on prévoit un organe de commande constitué par une manette articulée, quelquefois appelée "Joystick", dont le pivotement (vers le haut, vers le bas, vers la droite ou vers la gauche) permet de faire défiler un menu sur l'écran afin de sélectionner les informations et données souhaitées, la commande proprement dite étant réalisée par un appui sur la manette. A la place d'un appui sur la manette, la commande peut aussi être effectuée à l'aide d'un bouton supplémentaire pour l'entrée de données. En variante, la commande s'effectue à l'aide d'un boîtier de télécommande, par exemple de type à rayonnement infrarouge.

Dans le cas d'un appareil de navigation, par exemple à microprocesseur, on prévoit un lecteur de disques CD-ROM ou DVD-ROM ou un lecteur de mémoire PCMCIA. Ce lecteur peut être solidaire de l'écran ou éloigné de ce dernier, par exemple sur le tableau de bord, dans la boîte à gants ou dans un logement d'autoradio.

La liaison de l'écran à un lecteur et/ou aux capteurs (ces capteurs sont : un capteur de vitesse et compas ou gyromètre, un capteur GPS ou DGPS, dans le cas d'un appareil de navigation, un récepteur d'informations sur la densité de circulation, un radar ou une caméra dans les autres cas) peut être réalisée par fil(s) passant à travers l'organe de fixation du boîtier du rétroviseur au véhicule.

De façon générale, le dispositif peut comporter une autre partie et/ou des capteurs éloignés du rétroviseur et, dans ce cas, si la liaison à cette autre partie et/ou aux capteurs est réalisée par fil(s), ce fil (ou ces fils) passe(nt) de préférence à travers l'organe de fixation du rétroviseur au véhicule.

La transmission des données vers l'écran (données de navigation ou d'informations générales, de densité de circulation, de radar, de caméra ou autres informations) peut être effectuée sans fil, par exemple par transmission infrarouge ou HF. Par exemple, l'émetteur infrarouge ou HF se trouve sur le rebord plat du tableau de bord et émet vers le haut en direction du boîtier de rétroviseur et/ou du boîtier de l'écran.

Le boîtier du rétroviseur et/ou le boîtier de l'écran peut (peuvent) contenir tout ou partie des éléments électroniques ayant les fonctions de navigation, radar, caméra, récepteur, notamment d'informations de trafic (RDS-TMC, par exemple), récepteur de téléphone, en particulier GSM, lecteur de cartes à mémoires (par exemple cartes de crédit), lecteur de cartes de type PCMCIA, ou lecteur et traitement de données de cartes de télépéage ou télépaiement, récepteur infrarouge ou HF, et de récepteur de télévision.

On notera que, lorsque le boîtier du rétroviseur ou le boîtier de l'écran qui lui est fixé contient une antenne, notamment une antenne GSM ou GPS, la position de cette antenne à l'avant du véhicule, à proximité du pare-brise, est favorable à la réception.

Lorsque le boîtier d'écran est fixé à un boîtier de rétroviseur extérieur, la disposition d'une antenne, notamment d'une antenne radar, radio, RDS, GPS, D-GPS, dirigée vers l'avant, à l'extérieur du véhicule, est plus favorable pour la réception qu'une antenne disposée à l'intérieur du véhicule.

Le boîtier du rétroviseur intérieur et/ou le boîtier d'écran qui lui est fixé peut contenir un dispositif de reconnaissance vocale. La reconnaissance vocale est utilisée par exemple dans un appareil de navigation pour indiquer le lieu de destination.

Dans une réalisation se rapportant à un appareil de navigation, les données relatives à la navigation sont reçues par radio ou par téléphone GSM. Dans ce cas, la réception peut être effectuée dans le même boîtier que celui prévu pour l'écran
ou dans le boîtier du rétroviseur (intérieur ou extérieur).

Ainsi, le boîtier fixé au rétroviseur et/ou le boîtier du rétroviseur assure(nt) tout ou partie des fonctions, énumérées ci-dessus, du système de navigation.

Le rétroviseur intérieur et le boîtier d'écran qui en est solidaire peuvent être disposés au niveau de la partie inférieure ou supérieure du pare-brise.

L'écran peut constituer le terminal de visualisation commun à un appareil de navigation, à un appareil à radar en cas de faible visibilité, à un appareil récepteur d'informations de densité de circulation ou à un appareil à caméra pour l'aide à la marche arrière. Cet écran peut aussi être utilisé pour la visualisation d'émissions de télévision ou de magnétoscope ou analogue et pour d'autres utilisations décrites ci-après.

Une autre utilisation intéressante est la visualisation des données relatives à l'entretien et aux réparations du véhicule avec les dates des opérations effectuées. A cet effet, les données relatives à ces réparations et interventions d'entretien sont inscrites sur une carte à mémoire, telle qu'une carte magnétique ou à circuit intégré, et le véhicule contient un lecteur d'une telle carte, et les données sont affichées sur l'écran. Le lecteur peut être dans le même boîtier que celui contenant l'écran. Il peut aussi être solidaire du boîtier du rétroviseur intérieur.

Selon encore une autre application, le boîtier de rétroviseur interne ou externe ou le boîtier de l'écran constitue un support pour une carte de télépéage ou de télépaiement. On sait qu'une telle carte comporte des données relatives à son titulaire et à un compte qui lui est affecté et, quand le véhicule passe devant une borne de télépéage, un émetteur/récepteur incorporé dans cette carte permet de transférer, vers la borne, des données de manière telle que le compte du titulaire soit débité ou que des unités de compte soient déduites dans la carte elle-même. L'écran peut alors être utilisé pour afficher des données relatives au péage et au compte du titulaire, telles que le prix du péage qui est débité ou la valeur qui reste affectée à la carte de télépéage. Une carte de télépaiement peut aussi être utilisée, dans les mêmes conditions, pour le paiement du carburant ou le paiement d'un stationnement.

Il est à noter que l'invention s'applique à tout type de véhicule automobile, qu'il soit à deux (motocyclette, par exemple), trois ou quatre roues ou davantage. Elle s'applique également à des véhicules automobiles nautiques, tels que des hors-bords. Elle s'applique aussi aux avions.

Dans un mode de réalisation, qui peut s'utiliser en combinaison avec les dispositions décrites ci-dessus, ou indépendamment de ces dernières (c'est-à-dire indépendamment de la fixation d'un boîtier d'écran à un boîtier de rétroviseur), on prévoit un appareil de navigation qui fournit un signal indiquant au conducteur qu'il doit actionner son indicateur de changement de direction, quand le programme de cet appareil a déterminé que le véhicule doit tourner à gauche ou à droite. Ce signal est, par exemple, un signal lumineux faisant, dans une réalisation, appel à la même diode ou ampoule que celle confirmant qu'un changement de direction est à entreprendre. Il peut aussi s'agir d'un signal sonore faisant, dans une réalisation, appel au même générateur sonore que celui confirmant un changement de direction. Dans une variante, c'est l'indicateur de changement de direction qui est actionné automatiquement par le programme de l'appareil de navigation. Le conducteur dispose ainsi d'une instruction ou assistance supplémentaire sur l'action à entreprendre ; même si l'indicateur de changement de direction est actionné automatiquement, le conducteur peut confirmer manuellement la manoeuvre de cet indicateur, et cet indicateur peut alors revenir à un fonctionnement manuel.

Ainsi, dans le cas d'un appareil de navigation, l'invention fournit un ensemble d'informations qui augmente la sécurité de la conduite. Par exemple, dans le cas d'un changement de direction, l'appareil de navigation fournit, avant ce changement de direction, tout d'abord, une information sonore (par exemple, "tourner à droite") et/ou visuelle suffisamment à l'avance par rapport à l'action à entreprendre, par exemple une cinquantaine de mètres avant le tournant en ville et 500 mètres à un kilomètre sur route. Ces informations sont, ensuite, confirmées à l'approche du tournant à effectuer par une instruction cartographique sur l'écran intérieur et/ou un écran extérieur. Le conducteur, déjà alerté par l'information sonore et/ou visuelle sur le prochain changement de direction, doit, quand il commence à entreprendre ce changement de direction, - comme l'y invite le code de la route - porter son regard vers le rétroviseur intérieur et vers le rétroviseur extérieur se trouvant du côté duquel il doit tourner. Dans ces conditions, si un écran est solidaire de ce rétroviseur extérieur, le tournant qu'il doit effectuer lui est confirmé sur cet écran.

### Description de l'état de la technique :

Dans le brevet US 5 708 410 est décrit un boîtier d'écran fixé à la monture servant de support d'un rétroviseur. Ce boîtier n'est, ainsi, pas fixé à un coté du boîtier du rétroviseur.

Dans le brevet US 5 631 638 est décrit un rétroviseur dont une partie de la surface est occultée par un afficheur. Cet afficheur n'est donc pas orientable par rapport à la surface du miroir.

Le document JP 60 157 941 décrit un écran disposé sur une partie de la surface du rétroviseur et qui affecte donc la vision dans ce dernier.

Le document JP 02 018 130 décrit un écran de télévision qui est fixé sur un coté d'un rétroviseur et qui ne peut pas être orienté par rapport à ce dernier.

La présente invention prévoit ainsi un accessoire pour véhicule automobile, qui comprend un boîtier de rétroviseur intérieur ou extérieur et un boîtier d'écran de dispositif d'affichage d'informations destinées au conducteur du véhicule, le boîtier d'écran étant fixé, par exemple de façon amovible, au boîtier du rétroviseur de façon telle que ce boîtier d'écran n'affecte pas la vision dans le miroir du rétroviseur, le miroir et l'écran étant visibles simultanément, et en ce que l'accessoire comporte, en outre, des moyens, par exemple à articulation ou à rotule, pour régler l'orientation de la surface de l'écran par rapport à la surface du miroir du rétroviseur.

Selon un mode de réalisation, l'accessoire comprend des moyens de commande de la visualisation qui sont solidaires du boîtier du rétroviseur ou du boîtier d'écran.

Selon un mode de réalisation, les moyens de commande comprennent un organe dont le pivotement assure le défilement d'un menu, la sélection des données étant effectuée par l'appui sur cet organe, ou par l'actionnement d'un autre organe de commande.

Selon un mode de réalisation, l'accessoire comprend une autre partie et/ou des capteurs éloignés du rétroviseur et en ce que la liaison à l'autre partie et/ou aux capteurs est réalisée soit par une liaison sans fil, soit par fil(s) passant à travers la fixation du boîtier du rétroviseur.

Selon un mode de réalisation, le boîtier de l'écran et/ou le boîtier du rétroviseur comprend(nent) tout ou partie des éléments électroniques assurant une ou plusieurs des fonctions suivantes destinées à être visualisées sur l'écran : navigation, radar, caméra, récepteur radio, récepteur téléphonique. lecteur et/ou traitement de données de cartes à mémoire ou disques, pour des données cartographiques, des informations générales ou des données de réparation ou d'entretien du véhicule ou des données de paiement, notamment de télépaiement, récepteur infrarouge ou HF, récepteur de télévision.

Selon un mode de réalisation, le boîtier de l'écran et/ou le boîtier du rétroviseur intérieur comprend (comprennent) des moyens de reconnaissance vocale.

L'invention prévoit en outre un dispositif à écran pour l'affichage d'informations destinées au conducteur d'un véhicule automobile, que le boîtier de l'écran étant fixable au boîtier du rétroviseur du véhicule, de façon telle qu'il n'affecte pas la vision dans le miroir du rétroviseur et que le miroir et l'écran soient visibles en même temps, et le dispositif comprenant des moyens pour régler l'orientation de la surface de l'écran par rapport à la surface du miroir du rétroviseur.

Selon un mode de réalisation, la fixation du boîtier de l'écran au boîtier du rétroviseur est amovible.

Selon un mode de réalisation, le boîtier de l'écran est fixable par pinçage au boîtier du rétroviseur et articulable à ce dernier.

Selon un mode de réalisation, le dispositif comprend :
un premier boîtier d'écran fixable au boîtier d'un rétroviseur intérieur, et
au moins un second boîtier d'écran fixable à un boîtier de rétroviseur extérieur, l'écran de ce second boîtier d'écran étant susceptible d'afficher les mêmes informations ou des informations qui complètent les informations affichées sur l'écran du premier boîtier d'écran.

Selon un mode de réalisation, le dispositif comprend des moyens pour commander l'affichage des informations sur l'écran extérieur de façon telle que cet affichage n'intervienne, sous la commande d'un appareil de navigation, que lorsque des informations concernent le côté où se trouve le boîtier de rétroviseur extérieur.

D'autres caractéristiques et avantages de l'invention apparaîtront avec la description de certains de ses modes de réalisation, celle-ci étant effectuée en se référant aux dessins ci-annexés sur lesquels :
la figure 1 est une représentation en perspective d'un accessoire comportant un rétroviseur intérieur et un écran conformes à l'invention, et
la figure 2 est un schéma d'un ensemble de trois accessoires comportant un écran intérieur et deux écrans extérieurs conformes à l'invention.

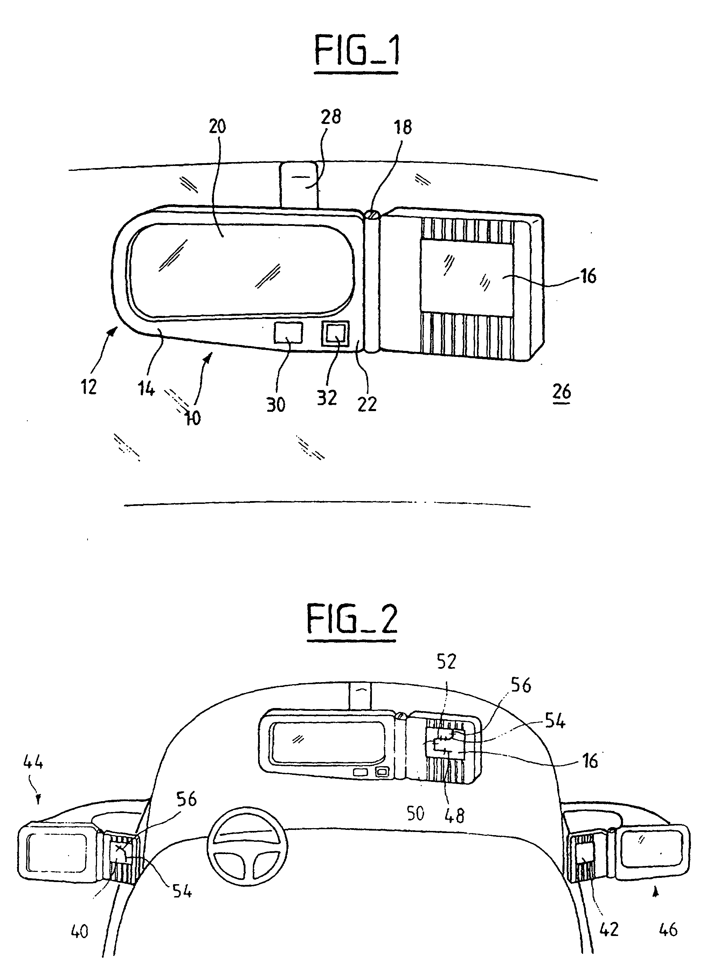

Dans l'exemple représenté sur la figure 1, l'accessoire 10 est installé dans un véhicule pour la conduite à droite, le volant (non représenté) étant ainsi disposé à gauche du véhicule. Cet accessoire 10 comporte, d'une part, un rétroviseur intérieur 12 de forme générale rectangulaire et, d'autre part, articulé au boîtier 14 du rétroviseur 12, sur son côté vertical droit, un boîtier d'écran 16 d'affichage d'informations pour un système de navigation. Cet écran peut aussi être utilisé à d'autres fins, comme décrit ci-dessus.

Un système de navigation étant aujourd'hui bien connu, on ne le décrira donc pas en détail. On rappelle seulement que, sur l'écran 16. peuvent apparaître une carte et des instructions de guidage, en général sous forme de cartographie, de symboles ou d'images immédiatement compréhensibles qui permettent au conducteur de déterminer la voie à prendre quand il doit changer de direction. En général, l'appareil de navigation fournit, pour le guidage, des informations pas à pas, tournant après tournant, concernant les actions successives à entreprendre. Les indications cartographiques peuvent être représentées soit de façon classique avec une carte orientée au nord, soit, de façon plus pratique, selon la direction de la voie suivie.

Dans l'exemple, les données cartographiques nécessaires sont stockées sur un disque tel qu'un CD-ROM ou un DVD-ROM ou sur une carte à mémoire de type PCMCIA. Dans les deux cas, on prévoit un lecteur (non montré) qui se trouve sur le tableau de bord. En variante (non montrée), le lecteur se trouve dans le même boîtier que l'écran 16 ou dans le boîtier du rétroviseur.

Dans une autre réalisation, les données cartographiques sont reçues par un récepteur radio ou un téléphone, notamment du type GSM. Dans ce cas, le récepteur radio ou le récepteur GSM peut être logé dans le même boîtier que l'écran 16
ou dans le boîtier 14.

Le boîtier de l'écran 16 a une forme générale correspondant aux formes et dimensions de l'écran. L'articulation 18 de ce boîtier de l'écran 16 au boîtier 14 du rétroviseur 12 permet de conférer à l'écran 16 une orientation indépendante de l'orientation du miroir 20 du rétroviseur 12. L'articulation 18 est selon un axe vertical proche du bord vertical droit 22 du boîtier 14 du rétroviseur 12. On peut également prévoir une autre articulation (non montrée) selon un axe horizontal, par exemple au milieu du côté 22, ou encore une rotule solidaire du rétroviseur et du boîtier d'écran. Ainsi, l'orientation de l'écran 16 est quelconque par rapport à l'orientation du miroir 20. On peut aussi prévoir une jonction des deux boîtiers par des moyens de pinçage, quelquefois appelés moyens de clipsage.

Le réglage de l'orientation de l'écran 16 permet de diriger la normale au plan de cet écran vers le conducteur, ce qui fournit les meilleurs résultats en luminosité et en couleurs quand on a affaire à un écran du type à cristaux liquides.

Bien que, dans l'exemple, l'écran soit articulé sur le côté droit (côté passager) du boîtier du rétroviseur intérieur, on comprend que l'écran 16 peut être articulé à un côté quelconque du boîtier 14. En d'autres termes, l'écran 16 peut être articulé aussi sur le côté gauche, sur le côté supérieur ou sur le côté inférieur du boîtier 14.

Dans l'exemple représenté sur la figure 1, le rétroviseur 12 se trouve au voisinage de la partie supérieure du pare-brise 26 et il est fixé au pare-brise ou au plafond du véhicule par l'intermédiaire d'un bras 28. Ce bras 28 loge des fils (non montrés) reliant l'écran au lecteur.

Si le lecteur se trouve dans le même boîtier que l'écran 16, le bras 28 loge des fils de connexion au capteur de vitesse et à un compas ou gyromètre, ainsi qu'à un détecteur GPS ou DGPS.

En variante, les données affichées sur l'écran sont reçues par un récepteur, logé dans le même boîtier que l'écran 16, ou dans le boîtier du rétroviseur, par une transmission sans fil, notamment une transmission hautes fréquences (HF) ou infrarouge.

Quand les données sont reçues par radio ou téléphone GSM, le récepteur de ces données peut se trouver dans le boîtier du rétroviseur ou dans le boîtier de l'écran.

La face avant du boîtier 14 du rétroviseur 12 présente, d'une part, un organe 32 de commande de type "Joystick" permettant, par pivotement autour d'un axe (non montré), de faire défiler un menu sur l'écran afin de sélectionner les informations ou données souhaitées, et, d'autre part, un bouton 30 pour l'entrée des données.

Dans une autre réalisation, on appuie sur l'organe 32 pour entrer les données qui ont été sélectionnées par le pivotement de cet organe.

En variante (non montrée) les commandes se trouvent sur le tableau de bord, sur le volant ou sur un dispositif de télécommande par exemple à infrarouge.

Dans une réalisation, le boîtier de l'écran 16 est démontable du rétroviseur 12, ce qui constitue une sécurité contre le vol et permet éventuellement l'usage hors du véhicule.

Dans une variante (non représentée), les moyens de sélection et de commande 32 et éventuellement 30 se trouvent sur le boîtier de l'écran 16. Cette variante est utile, en particulier quand pratiquement tous les modules électroniques nécessaires à la navigation (et/ou les autres fonctions) se trouvent dans le boîtier de l'écran 16. Dans ce cas, on a affaire à un dispositif qui peut être autonome, mais qui est doté de moyens de fixation au boîtier du rétroviseur.

L'écran de l'appareil de navigation peut non seulement fournir des informations cartographiques et de guidage, mais aussi des informations sur la densité de la circulation dans la zone où se trouve le véhicule, ces informations étant par exemple fournies par radio. Il est également possible d'utiliser l'écran pour assister le conducteur en cas de mauvaise visibilité, un radar étant prévu pour détecter les obstacles. On peut aussi utiliser l'écran pour la conduite en marche arrière, une caméra étant alors prévue pour visualiser la route à l'arrière du véhicule. L'écran peut aussi être utilisé pour l'affichage d'informations générales, telles que des informations provenant d'un réseau du type Internet ou d'une mémoire.

Le même écran intérieur peut être utilisé pour l'affichage de toutes ces fonctions. Il peut également servir à d'autres fonctions telles que la visualisation (pour les passagers) d'émissions de télévision ou de magnétoscope.

En variante, le rétroviseur intérieur et l'écran qui lui est attaché sont fixés au tableau de bord.

Le boîtier du rétroviseur ou le boîtier de l'écran 16 peut comporter un bouton de "marche/arrêt". En variante, la mise en marche et l'arrêt de l'accessoire ou du dispositif sont commandés par la clé de contact du véhicule.

Il est également possible d'incorporer un haut-parleur au boîtier de l'écran 16 ou au boîtier du rétroviseur intérieur, ce haut-parleur fournissant, dans le cas d'un appareil de navigation, des informations ou instructions de guidage.

Dans le mode de réalisation représenté sur la figure 2, on a prévu trois écrans, à savoir un écran 16 dont le boîtier est solidaire du boîtier du rétroviseur intérieur et deux écrans extérieurs, de références, respectivement 40 et 42. Cette figure 2 est, bien entendu, schématique ; par exemple le rétroviseur intérieur de l'écran 16 a été représenté de façon agrandie par rapport aux dimensions du pare-brise ; de même, l'orientation des écrans 40 et 42 ne correspond pas forcément à l'utilisation habituelle, puisque ces écrans doivent être orientés de façon à être visibles par le conducteur.

Le boîtier de l'écran 40 est fixé au boîtier du rétroviseur extérieur gauche 44, tandis que le boîtier de l'écran 42 est fixé au boîtier du rétroviseur extérieur droit 46. Le boîtier de l'écran 40 est fixé sur le côté du boîtier du rétroviseur gauche qui est tourné vers le véhicule, c'est-à-dire sur son côté droit, tandis que le boîtier de l'écran 42 est fixé sur le côté gauche du boîtier du rétroviseur droit 46.

Dans cet exemple, on prévoit un appareil de navigation dont le lecteur (non représenté) est fixé soit au boîtier d'écran 16, soit au boîtier de rétroviseur intérieur, soit en un autre endroit dans le véhicule ; cet appareil commande les affichages sur les trois écrans 16, 40 et 42.

Cette commande des affichages est telle que, sur l'écran 16, on fournit les informations cartographiques présentant la partie de l'itinéraire emprunté et la partie de cet itinéraire qui devra être empruntée après avoir changé de direction, à savoir après avoir tourné à gauche dans l'exemple représenté.

Par contre, sur les écrans 40 et 42, sont affichées les indications ou instructions précises sur les actions à entreprendre. Sur l'écran 40, on indique, par un agrandissement cartographique, qu'il faut tourner à gauche ce qui confirme l'indication fournie sur l'écran 16. Dans ce cas, l'écran 42 est éteint ou fournit une autre information. Quand la situation se présente, l'écran 42 fournit une indication, ou instruction, pour tourner à droite.

Sur l'écran 16, on a représenté un itinéraire à plusieurs sections 48, 50, 52, 54, 56. Le véhicule se trouvant sur la section 54, il doit ensuite emprunter la section 56 et, à cet effet, tourner à gauche. Dans ces conditions, l'écran 40 représente, à échelle agrandie, l'itinéraire avec la section suivie 54 et la section 56 qu'il devra ensuite suivre. L'itinéraire à suivre représenté sur les écrans est marqué de façon à être immédiatement compréhensible, par exemple par une couleur particulière pour la route à suivre.

La commande des écrans 16, 40 et 42 se trouve par exemple à l'intérieur du véhicule. L'activation des écrans 40 et 42 n'est pas forcément effectuée en permanence. Par exemple, ces écrans sont activés automatiquement (alternativement selon qu'il faut tourner à gauche ou à droite) par le programme de l'appareil de navigation quand ils doivent afficher une instruction de changement de direction.

Quel que soit le mode de réalisation, l'invention permet une conduite avec une sécurité maximale, car le conducteur peut observer simultanément la circulation à l'arrière du véhicule et les informations de guidage (ou d'autres informations) sans perdre de vue la route ou le trajet qu'il suit et en l'aidant à respecter le code de la route.

L'accessoire ou le dispositif selon l'invention peuvent être qualifiés de "rétroviseurs intelligents".

## Revendications

1. Accessoire pour véhicule automobile comprenant un boîtier de rétroviseur et un boîtier d'écran de dispositif d'affichage d'informations destinées au conducteur du véhicule, le boîtier d'écran (16) étant articulé, par exemple de façon amovible, à un côté du boîtier (14) du rétroviseur (12) de façon telle que ce boîtier d'écran n'affecte pas la vision dans le miroir du rétroviseur, le miroir et l'écran étant visibles simultanément,
l'accessoire comportant des moyens pour régler l'orientation de la surface de l'écran par rapport à la surface du miroir du rétroviseur afin que le conducteur puisse observer de face l'écran de visualisation,
**caractérisé en ce que** le rétroviseur étant du type intérieur ou extérieur :
l'accessoire étant destiné à l'affichage d'informations de navigation ou de guidage, le boîtier de l'écran et/ou le boîtier du rétroviseur comprend (nent) tout ou partie des éléments électroniques assurant une ou plusieurs des fonctions suivantes destinées à être visualisées sur l'écran : navigation, radar, carte, guidage, instruction de trafic,
l'écran de visualisation est du type à cristaux liquides, et les moyens pour régler l'orientation de la surface de l'écran par rapport à la surface du rétroviseur comprennent une double articulation ou une rotule.

2. Accessoire selon la revendication 1, **caractérisé en ce que** l'écran est articulé au côté supérieur du boîtier du rétroviseur intérieur.

3. Accessoire selon l'une des revendications 1 à 2, **caractérisé en ce que** la fixation du boîtier d'écran au boîtier de rétroviseur est effectuée par l'intermédiaire d'un dispositif de serrage ou pinçage appelé clipsage.

4. Accessoire selon l'une quelconque des revendications précédentes, **caractérisé en ce qu'**il comprend une autre partie d'éléments électroniques et/ou des capteurs éloignée(s) du rétroviseur et **en ce que** la liaison à l'autre partie et/ou aux capteurs est réalisée soit par une liaison sans fil, soit par fil(s) passant à travers la fixation (28) du boîtier du rétroviseur.

5. Accessoire selon l'une quelconque des revendications précédentes, **caractérisé en ce que** le boîtier de l'écran et/ou le boîtier du rétroviseur comprend(nent) tout ou partie des éléments électroniques assurant une ou plusieurs des fonctions suivantes destinées à être visualisées sur l'écran : caméra, récepteur radio, récepteur téléphonique, lecteur et/ou traitement de données de cartes à mémoire ou disques, pour des données cartographiques, des informations générales ou des données de réparation ou d'entretien du véhicule ou des données de paiement, notamment de télépaiement, récepteur infrarouge ou HF, antennes, récepteur internet.

6. Accessoire selon la revendication 1, **caractérisé en ce que** le boîtier de l'écran et/ou le boîtier du rétroviseur intérieur comprend (comprennent) des moyens de reconnaissance vocale.

7. Accessoire selon l'une des revendications précédentes, **caractérisé en ce que** le boîtier de l'écran et/ou le boîtier du rétroviseur intérieur comprend (comprennent) un haut parleur.

8. Accessoire selon l'une quelconque des revendications précédentes, **caractérisé en ce qu'**il comprend :
un premier boîtier d'écran fixé au boîtier d'un rétroviseur intérieur, et
au moins un second boîtier d'écran fixé à un boîtier de rétroviseur extérieur,
l'écran de ce second boîtier d'écran étant susceptible d'afficher les mêmes informations que, ou des informations qui complètent, les informations affichées sur l'écran du premier boîtier d'écran.

9. Accessoire selon la revendication 8, **caractérisé en ce qu'**il comprend des moyens pour commander l'affichage des informations sur l'écran extérieur de façon telle que cet affichage n'intervienne, sous la commande d'un appareil de navigation, que lorsque des informations concernent le côté où se trouve le boîtier de rétroviseur extérieur.

10. Accessoire selon l'une des revendications précédentes, **caractérisé en ce qu'**il comprend des moyens de commande de la visualisation qui sont solidaires du boîtier du rétroviseur ou du boîtier d'écran.

11. Accessoire selon la revendication 8, **caractérisé en ce que** les moyens de commande comprennent un organe (32) dont le pivotement assure le défilement d'un menu, la sélection des données étant effectuée par l'appui sur cet organe, ou par l'actionnement d'un autre organe de commande (30).

12. Accessoire selon l'une quelconque des revendications précédentes **caractérisé en ce que** les données relatives à la navigation sont reçues par radio ou par téléphone mobile ou par infrarouge.

13. Dispositif à écran pour l'affichage d'informations destinées au conducteur d'un véhicule automobile, le boîtier dudit écran (16) comportant des moyens de fixation à un côté d'un boîtier (14) de rétroviseur intérieur ou extérieur (12) du véhicule, ces moyens de fixation étant tels que, lorsque le boîtier est fixé au côté du boîtier du rétroviseur, ce boîtier de l'écran n'affecte pas la vision dans le miroir du rétroviseur et le miroir et l'écran sont visibles en même temps, les moyens de fixation étant tels qu'ils permettent de régler l'orientation de la surface de l'écran par rapport à la surface du miroir du rétroviseur afin que le conducteur puisse observer de face l'écran de visualisation, **caractérisé en ce que**, l'écran, qui est destiné à l'affichage d'informations de navigation ou de guidage, est à cristaux liquides, et **en ce que** les moyens pour régler l'orientation de la surface de l'écran par rapport à la surface du rétroviseur comprennent une double articulation ou une rotule.

14. Dispositif selon la revendication 13, **caractérisé en ce que** les moyens de fixation du boîtier d'écran au boîtier du rétroviseur comporte des moyens de serrage ou pinçage appelés clipsage.

15. Dispositif selon l'une des revendications 13 ou 14, **caractérisé en ce qu'**il comprend tout ou partie des éléments électroniques assurant une ou plusieurs des fonctions suivantes destinées à être visualisées sur l'écran : navigation, radar, carte, guidage, instruction de trafic, caméra, récepteur radio, récepteur téléphonique, lecteur et/ou traitement de données de cartes à mémoire ou disques, pour des données cartographiques, des informations générales ou des données de répartition ou d'entretien du véhicule ou des données de paiement, notamment de télépaiement, récepteur infrarouge ou HF, antenne, récepteur internet.

16. Dispositif selon l'une des revendications 13 à 15, **caractérisé en ce qu'**il comprend :
un premier boîtier d'écran fixable au boîtier d'un rétroviseur intérieur, et
au moins un second boîtier d'écran fixable à un boîtier d'un rétroviseur extérieur, l'écran de ce second boîtier d'écran étant susceptible d'afficher les mêmes informations ou des informations qui complètent les informations affichées sur l'écran du premier boîtier d'écran.

17. Dispositif selon la revendication 16, **caractérisé en ce qu'**il comprend des moyens pour commander l'affichage des informations sur l'écran extérieur de façon telle que cet affichage n'intervienne, sous la demande d'un appareil de navigation, que lorsque des informations concernent le côté où se trouve le boîtier de rétroviseur extérieur.

## Patentansprüche

1. Kraftfahrzeugzubehör mit einem Rückspiegelgehäuse und einem Gehäuse für einen Informationsbildschirm für einen Fahrzeuglenker, bei dem
das Gehäuse des Bildschirms (16) beispielsweise verstellbar auf einer Seite des Gehäuses (14) für den Rückspiegel (12) so angelenkt ist, dass das Bildschirmgehäuse den Blick in den Rückspiegel nicht beeinträchtigt und der Rückspiegel und der Bildschirm gleichzeitig sichtbar sind,
das Zubehör Mittel aufweist zur Einstellung der Ausrichtung der Oberfläche des Bildschirms in Bezug auf die Oberfläche des Rückspiegels, damit der Fahrzeuglenker den Bildschirm von vorn beobachten kann,
**dadurch gekennzeichnet, dass** es sich bei dem Rückspiegel um einen Innen- oder Aussenspiegel handelt,
dass das Zubehör zur Anzeige von Navigations- oder Führungsinformation vorgesehen ist, wobei das Gehäuse des Bildschirms und/oder das Gehäuse des Rückspiegels sämtliche oder einen Teil von elektronischen Bauelementen enthält, welche eine oder mehrere der folgenden Funktionen gewährleisten, die zur Sichtbarmachung auf dem Bildschirm bestimmt sind: Navigation, Radar, Karte, Führung, Verkehrshinweise,
dass der Bildschirm ein Flüssigkristall-Bildschirm ist, und
dass die Mittel zur Einstellung der Ausrichtung der Oberfläche des Bildschirms in Bezug auf die Oberfläche des Rückspiegels eine doppelte Gelenkverbindung oder ein Kugelgelenk aufweisen.

2. Zubehör nach Anspruch 1, **dadurch gekennzeichnet, dass** der Bildschirm oberhalb des Gehäuses für den Innenrückspiegel angelenkt ist.

3. Zubehör nach Anspruch 1 oder 2, **dadurch gekennzeichnet, dass** die Befestigung des Gehäuses für den Bildschirm an dem Rückspiegelgehäuse mittels einer Spann- oder Klemm- (Schnapp-) vorrichtung erfolgt.

4. Zubehör nach einem der vorhergehenden Ansprüche, **dadurch gekennzeichnet, dass** das Zubehör einen anderen Teil von elektronischen Bauelementen und/oder vom Rückspiegel getrennt vorhandene Sensoren enthält, und dass die Verbindung zu dem anderen Teil von elektronischen Bauelementen und/oder den Sensoren entweder durch eine drahtlose Verbindung oder durch Draht/Drähte erfolgt, der/die durch die Befestigung (28) des Rückspiegelgehäuses hindurchgeht/hindurchgehen.

5. Zubehör nach einem der vorhergehenden Ansprüche, **dadurch gekennzeichnet, dass** das Gehäuse des Bildschirms und/oder das Gehäuse des Rückspiegels sämtliche oder einen Teil von elektronischen Bauelemente(n) enthält, die eine oder mehrere der im Folgenden genannten Funktionen gewährleisten, die zur Sichtbarmachung auf dem Bildschirm bestimmt sind. Kamera, Rundfunkempfänger, Femsprechempfänger, Lesegerät und/oder Gerät zur Verarbeitung der Daten von Speicherkarten oder von Platten für kartographische Angaben, allgemeine Informationen oder Angaben zur Reparatur oder Wartung des Fahrzeugs oder Zahlungshinweise, insbesondere bezüglich des elektronischen Zahlungsverkehrs, Infrarot- oder HF-Empfänger, Antennen, Internetempfänger.

6. Zubehör nach Anspruch 1, **dadurch gekennzeichnet, dass** das Gehäuse des Bildschirms und/oder das Gehäuse des Innenrückspiegels Mittel zur Spracherkennung aufweist.

7. Zubehör nach einem der vorhergehenden Ansprüche, **dadurch gekennzeichnet, dass** das Gehäuse des Bildschirms und/oder das Gehäuse des Innenrückspiegels einen Lautsprecher aufweist.

8. Zubehör nach einem der vorhergehenden Ansprüche, **gekennzeichnet durch** folgende Merkmale:
Ein erstes an dem Gehäuse eines Innenrückspiegel befestigtes Bildschirmgehäuse, und
mindestens ein zweites Bildschirmgehäuse, das an dem Gehäuse eines Aussenrückspiegel befestigt ist,
wobei auf dem Bildschirm des zweiten Bildschirmgehäuses dieselben Informationen wie auf dem Bildschirm des ersten Bildschirmgehäuses angezeigt werden oder Informationen, welche diese ergänzen.

9. Zubehör nach Anspruch 8, **dadurch gekennzeichnet, dass** Mittel zur Steuerung der Anzeige von Informationen auf dem Aussenbildschirm vorgesehen sind, derart, dass diese Anzeige auf Befehl eines Navigationsgeräts nur dann erscheint, wenn die jeweiligen Angaben die Fahrzeugseite betreffen, auf der sich das Gehäuse des Aussenrückspiegels befindet.

10. Zubehör nach einem der vorhergehenden Ansprüche, **gekennzeichnet durch** Mittel zur Steuerung der Anzeige, die mit dem Rückspiegelgehäuse oder dem Bildschirmgehäuse fest verbunden sind.

11. Zubehör nach Anspruch 8, **dadurch gekennzeichnet, dass** die Mittel zur Steuerung der Anzeige eine Vorrichtung (32) aufweisen, dessen Drehung ein Menü vorbeilaufen lässt, bei dem die Auswahl der Daten durch Drücken diese Vorrichtung oder durch Betätigung eines anderen Steuer Vorrichtung (30) erfolgt.

12. Zubehör nach einem der vorhergehenden Ansprüche, **dadurch gekennzeichnet, dass** die sich auf die Navigation beziehenden Daten über Rundfunk oder Mobiltelefon oder durch Infrarot empfangen werden.

13. Vorrichtung mit einem Bildschirm für die Anzeige von Informationen für den Lenker eines Kraftfahrzeugs, wobei das Gehäuse des Bildschirms (16) Mittel zur Befestigung auf einer Seite des Gehäuses (14) des Innen- oder des Aussenrückspiegels (12) des Fahrzeugs enthält und diese Mittel so ausgebildet sind, dass dann, wenn das Gehäuse an der Seite des Rückspiegelgehäuses befestigt ist, das Bildschirmgehäuse den Blick in den Spiegel des Rückspiegels nicht beeinträchtigt und der Spiegel und der Bildschirm gleichzeitig sichtbar sind, und wobei die Befestigungsmittel so ausgebildet sind, dass sie die Einstellung der Ausrichtung der Oberfläche des Bildschirms in Bezug auf die Oberfläche des Rückspiegels ermöglichen, damit der Fahrzeuglenker den Bildschirm von vom betrachten kann, **dadurch gekennzeichnet, dass** der Bildschirm, welcher der Anzeige von Navigations- oder Führungsinformationen dient, aus Flüssigkristall besteht, und dass die Mittel zur Einstellung der Ausrichtung der Oberfläche des Bildschirms in Bezug auf die Oberfläche des Rückspiegels eine doppelte Gelenkverbindung oder ein Kugelgelenk besitzen.

14. Vorrichtung nach Anspruch 13, **dadurch gekennzeichnet, dass** die Mittel zur Befestigung des Bildschirmgehäuses an dem Gehäuse des Rückspiegels eine Spann- oder Klemm- (Schnapp) -vorrichtung, enthalten.

15. Vorrichtung nach Anspruch 13 oder 14, **dadurch gekennzeichnet, dass** sie sämtliche oder einen Teil von elektronischen Bauteile(n) enthält, welche eine oder mehrere der im Folgenden genannten Funktionen gewährleisten, welche zur Sichtbarmachung auf dem Bildschirm vorgesehen sind: Navigation, Radar, Karte, Führung, Verkehrshinweise, Kamera, Rundfunkempfänger, Femsprechempfänger, Lesegerät und/oder Gerät zur Verarbeitung der Daten von Speicherkarten oder Platten für kartographische Angaben, allgemeine Informationen oder Angaben zur Reparatur oder Wartung des Fahrzeugs oder Zahlungshinweise, insbesondere bezüglich des elektronischen Zahlungsverkehrs, Infrarot- oder HF-Empfänger, Antennen, Internetempfänger.

16. Vorrichtung nach Anspruch 13 bis 15, **gekennzeichnet durch** folgende Merkmale:
ein erstes Bildschirmgehäuse, das an dem Gehäuse eines Innenrückspiegel befestigbar ist, sowie
mindestens ein zweites Bildschirmgehäuse, das an dem Gehäuse eines Aussenrückspiegels befestigbar ist,
wobei auf dem Bildschirm des zweiten Bildschirmgehäuses dieselben Informationen wie auf dem Bildschirm des ersten Bildschirmgehäuses angezeigt werden oder Informationen, welche diese ergänzen.

17. Vorrichtung nach Anspruch 16, **gekennzeichnet durch** Mittel zur Steuerung der Anzeige der Informationen auf dem Aussenbildschirm, derart, dass diese Anzeige auf Befehl eines Navigationsgeräts nur dann erscheint, wenn die jeweiligen Angaben die Fahrzeugseite betreffen, auf der sich das Gehäuse des Aussenrückspiegels befindet.

## Claims

1. A motor vehicle accessory comprising a rear-view mirror case and a display screen housing for a display device for information intended for the driver of the vehicle, the screen housing (16) being articulated, for example in a removable way, to one side of the rear-view mirror (12) case (14) in such a way that the screen housing does not affect vision in the rear-view mirror, the mirror and the screen being visible at the same time,
the accessory comprising means for adjusting the orientation of the surface of the screen with respect to the surface of the rear-view mirror so that the driver can observe full-face the viewing screen,
**characterized in that**, the rear-view mirror being of the interior or exterior type:
the accessory being intended for the display of navigation or guidance information, the screen housing and/or the rear-view mirror case comprise(s) all or part of the electronic components providing one or several of the following functions intended to be viewed on the screen: navigation, radar, map, guidance, traffic instruction,
the viewing screen is of the liquid crystal type, and the means for adjusting the orientation of the screen surface with respect to the rear-view mirror surface comprise a double articulation or a ball joint.

2. An accessory according to Claim 1, **characterized in that** the screen is articulated to the upper side of the interior rear-view mirror case.

3. An accessory according to one of Claims 1 to 2, **characterized in that** the mounting of the screen housing to the rear-view mirror case is effected by means of a locking or clamping device, called "clip-on".

4. An accessory according to any one of the previous claims, **characterized in that** it comprises another part of the electronic components and / or sensors remote from the rear-view mirror and **in that** the connection to the other part and / or to the sensors is realized either by a wireless connection or by wire(s) passing through the mounting (28) of the case of the rear-view mirror.

5. An accessory according to any one of the previous claims, **characterized in that** the screen housing and / or the case of the rear-view mirror comprise(s) all or part of the electronic components providing one or a plurality of the following functions intended to be viewed on the screen: camera, radio receiver, telephone receiver, data reader and / or data processing from memory cards or disks, for cartographic data, general information or vehicle repair or maintenance data or payment data, more particularly telepayment, infrared or HF receiver, antennas, internet receiver.

6. An accessory according to claim 1, **characterized in that** the housing of the screen and / or the case of the interior rear-view mirror comprise(s) voice recognition means.

7. An accessory according to one of the previous claims, **characterized in that** the housing of the screen and / or the case of the interior rear-view mirror comprise(s) a loud-speaker.

8. An accessory according to any one of the previous claims, **characterized in that** it comprises:
a first screen housing mounted on an interior rear-view mirror case, and
at least one second screen housing mounted on an exterior rear-view mirror case,
the screen of the second screen housing being capable of displaying the same information as, or complementary to, the information displayed on the screen of the first screen housing.

9. An accessory according to claim 8, **characterized in that** it comprises means for controlling the display of the information on the external screen in such a way that the latter display is provided, under the control of a navigation device, only when the information concerns the side whereon the case of the exterior rear-view mirror is arranged.

10. An accessory according to one of the previous claims, **characterized in that** it comprises means for controlling the viewing which are attached to the rear-view mirror case or to the screen housing.

11. An accessory according to Claim 8, **characterized in that** the means for controlling comprise a device (32) which, when rotated, provides scrolling of a menu, the selection of the data being effected by pressing upon said device, or by actuation of another control device (30).

12. An accessory according to any one of the previous Claims, **characterized in that** the data relative to navigation are received by radio or by mobile telephone or by infrared.

13. A screen device for displaying information intended for the driver of a motor vehicle, the housing of said screen (16) comprising mounting means to a side of a case (14) of an interior or exterior rear-view mirror (12) of the vehicle, the mounting means being such that, when the housing is affixed to the side of the rear-view mirror case, the screen housing does not interfere with the vision in the rear-view mirror and both the mirror and the screen are visible at the same time; the mounting means being such that they allow adjusting of the orientation of the surface of the screen relative to the surface of the rear-view mirror so that the driver can observe full-face the viewing screen, **characterized in that** the screen which is intended for displaying navigation or guidance information, is of the liquid crystal type, and **in that** the means for adjusting the orientation of the surface of the screen relative to the surface of the rear-view mirror comprise a double articulation or a ball joint.

14. A device according to Claim 13, **characterized in that** the means of affixing the screen housing to the rear-view mirror case comprise locking or clamping means, called "clip-on".

15. A device according to one of Claims 13 or 14, **characterized in that** it comprises all or part of the electronic components providing one or a plurality of the following functions intended to be viewed on the screen: navigation, radar, map, guidance, traffic information, camera, radio receiver, telephone receiver, data reader and / or data processing from memory cards or disks, for cartographic data, general information or vehicle repair or maintenance data or payment data, namely telepayment, infrared or HF receiver, antenna, internet receiver.

16. A device according to one of Claims 13 to 15, **characterized in that** it comprises:
a first screen housing that can be affixed to the case of an interior rear-view mirror, and
at least one second screen housing that can be affixed to an exterior rear-view mirror case, the screen of said second screen housing being capable of displaying the same information as, or complementary to, the information displayed on the first screen housing screen.

17. A device according to Claim 16, **characterized in that** it comprises means for controlling the display of the information on the exterior screen in such a way that said display is provided, under the control of a navigation device, only when the information concerns the side on which the case of the exterior rear-view mirror is arranged.
